Europäisches Patentamt

**European Patent Office**

**Office européen des brevets**

(11) Numéro de publication: **0 083 539**
A2

(12) **DEMANDE DE BREVET EUROPEEN**

(21) Numéro de dépôt: **82402376.6**

(22) Date de dépôt: **23.12.82**

(51) Int. Cl.³: **F 16 H 35/02**

(30) Priorité: **31.12.81 FR 8124604**

(43) Date de publication de la demande: **13.07.83**
**Bulletin 83/28**

(84) Etats contractants désignés: **CH DE GB IT LI**

(71) Demandeur: **Herckelbout, Jacques Pierre Albert,**
**95 avenue de la Republique, F-75011 Paris (FR)**

(72) Inventeur: **Herckelbout, Jacques Pierre Albert,**
**95 avenue de la Republique, F-75011 Paris (FR)**

(74) Mandataire: **Vander-Heym, Roger, 172 Boulevard**
**Voltaire, F-75011 Paris (FR)**

(54) **Dispositif d'entraînement intermittent d'un arbre.**

㊼ Dispositif pour entraîner un arbre de façon intermittente à partir d'une commande continue, caractérisé en ce qu'il comporte une roue dentée (1) fixe, sur laquelle engrène une seconde roue dentée (2) qui est entraînée pour rouler de façon continue sur celle 1 , ladite roue (2) étant solidaire d'un disque (3) de plus grand diamètre comportant un doigt (7) susceptible d'entraîner en rotation dans les deux sens un bras (10) rendu solidaire de la bague extérieure d'une roue libre (11) d'entraînement de l'arbre mené (12).

0083539

La présente invention est relative à un dispositif d'entraînement intermittent d'un arbre.

Dans de nombreuses machines et notamment celles destinées à fabriquer des ressorts,on doit, à partir d'un arbre moteur tournant de façon continue entraîner un second arbre de façon intermittente, l'arrêt de l'arbre mené ne devant pas résulter de celui dudit arbre moteur.

En l'état actuel de la technique un tel résultat est obtenu en entraînant l'arbre mené par l'entremise d'une roue libre dont la cage extérieure est constituée par un pignon denté en prise avec un secteur denté dont l'oscillation est entretenue par un plateau rotatif présentant un doigt engagé dans une rainure radiale dudit secteur de manière que,selon le sens de pivotement du secteur, la roue libre entraîne ou n'entraîne pas l'arbre mené.

Ce dispositif ne donne pas entière satisfaction car le temps pendant lequel l'arbre mené est entraîné est égal à celui pendant lequel il ne l'est pas et qui correspond au retour du secteur denté.

Dans l'industrie des ressorts,notamment, le temps pendant lequel l'arbre est entraîné correspond à la phase d'enroulement du ressort, tandis que l'arrêt correspond à la phase de coupe qui doit être très brève. De ce fait, il est inutile d'arrêter l'arbre mené pendant un temps égal à celui pendant lequel il est entraîné.

La présente invention qui remédie à ces inconvénients utilise les propriétés connues d'un point d'un cercle qui roule sans glisser sur un autre cercle en décrivant une épicycloïde.

Ainsi, pour fixer les idées si le rayon du cercle mobile est la moitié de celui fixe, un point du cercle mobile décrit deux épicycloïdes tangentes selon un diamètre du cercle fixe.Par contre, si on considère un point situé sur un prolongement d'un rayon du cercle mobile celui-ci va décrire deux épicycloïdes sécantes par leurs extrémités.

Selon l'invention, le point situé sur le prolongement d'un rayon du cercle mobile est lié à un bras rendu solidaire par son autre extrémité de la cage d'une roue libre entraînant un arbre.Lorsque le cercle mobile, qui est constitué par un pignon denté, est entraîné et engrène avec un pignon fixe, le bras entraîne l'arbre. Lorsque le point décrit la fin et le début des deux épicycloïdes sécantes il se déplace en sens inverse du sens de rotation du pignon mobile et durant ce temps, le bras effectue une rotation en sens inverse.

On comprend, dès lors, que par un choix judicieux du sens d'entraînement du pignon mobile ou de celui de la roue libre, il est possible d'obtenir de brefs arrêts de l'arbre mené ou, inversement, de brèves périodes d'entraînement.

L'invention sera mieux comprise par la description qui va suivre faite en se référant aux dessins annexés à titre indicatif sur lesquels:

Les figures 1 et 2 sont des vues schématiques montrant en épure l'obtention des épicycloïdes ;

La figure 3 est une vue en perspective montrant le dispositif de l'invention ;

La figure 4 est une coupe longitudinale du dispositif ;

La figure 5 est une vue schématique à plus grande échelle du dispositif de l'invention;

La figure 6 est une vue en coupe, à plus grande échelle encore, montrant un détail de réalisation.

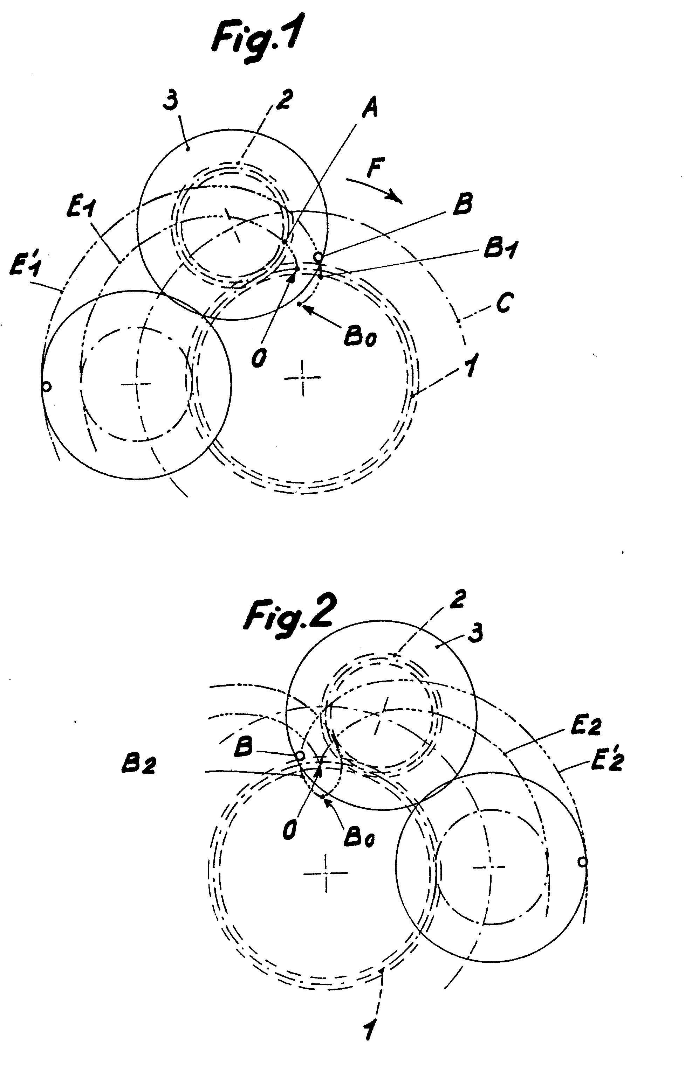

En se reportant aux figures 1 et 2 on voit que 1 est une roue dentée fixe autour de laquelle tourne une roue dentée 2 dont le diamètre est, par exemple, la moitié de celui de la roue 1.

Lorsque le centre de la roue dentée 2 décrit le cercle C autour de la roue dentée 1, un point A de la périphérie de ladite roue dentée 2 décrit, à chaque tour, deux épicycloïdes $E_1$ et $E_2$ identiques.

Si sur l'axe de la roue dentée 2 est calé un disque 3 d'un diamètre plus grand que celui de ladite roue dentée 2, un point B de la périphérie du disque 3 décrit deux épicycloïdes $E'_1$ et $E'_2$ allongées (courbes à boucle ) identiques et sécantes.

En considérant les points A et B, situés sur un rayon commun de la roue dentée 2 on voit que lorsque le point A , qui décrit la courbe $E_1$, s'approche du

- 3 -

0083539

pont O d'inflexion ( figure 1) le point B passe en avant de celui A par rapport au sens de rotation de la roue 2 (flèche F) jusqu'à atteindre le maximum montré sur la figure 1 (position B1).

Lorsque le point A arrive en O celui B est en Bo et lorsque le point A commence à décrire la courbe E2 celui B se déplace en E'2 en sens inverse jusqu'au maximum montré sur la figure 2 (position B2) puis à partir de la position B2 il continue à décrire la courbe E'2 mais dans le même sens que celui du point A décrivant la courbe E2. On constate donc qu'entre la position B1 et B2 tout s'est passé comme si le point B avait effectué une brève rotation selon un sens opposé à la flèche F.

Selon l'invention, ce phénomène est avantageusement utilisé pour commander l'entraînement intermittent d'un arbre tel que, par exemple, celui de commande du galet presseur d'entraînement du fil dans une machine à façonner les ressorts.

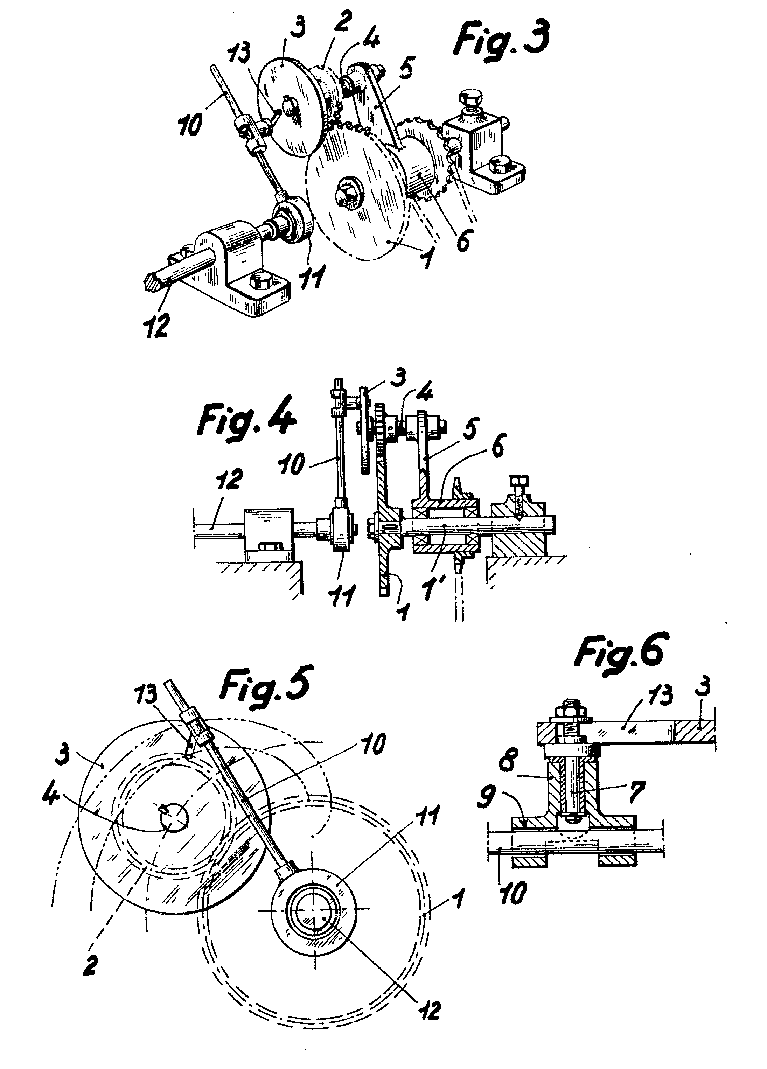

En se reportant aux figures 3,4 et 5 on voit que la roue 1 fixe engrène avec la roue 2 mobile clavetée sur un axe 4 entraîné par une manivelle 5 clavetée sur un manchon 6, moteur, pouvant tourner librement sur l'axe 1', fixe, de la roue 1.

La roue 2 est rendue solidaire du disque 3 qui présente un doigt 7 sur lequel peut tourillonner un fourreau 8 présentant, transversalement à son axe, un alésage 9 dans lequel peut coulisser un bras 10 dont une extrémité est rendue solidaire de la bague extérieure d'une roue libre 11 susceptible d'entraîner un arbre 12.

Lorsque le manchon 6 tourne, il entraîne l'axe 4 et, de ce fait, la roue 2 roule sur celle 1 en entraînant le doigt 7 par l'entremise du disque 3 ce qui a pour effet d'entraîner l'arbre 12 par l'intermédiaire du bras 10 et de la roue libre 11.

Comme il ressort des explications ci-dessus, on comprend que le doigt 7 correspond au point B décrit en regard des figures 1 et 2.

Lorsque le doigt 7 passe de la position B1 à celle

- 4 -

0083539

B2 le bras 10 pivote en sens inverse de la flèche F et si ce sens correspond au débrayage de la roue libre, on comprend que l'arbre 12 n'est pas entraîné durant ce déplacement.

Dans l'exemple décrit et représenté on a considéré que le rayon de la roue dentée 1 fixe était le double de celui de la roue dentée 2 mais les deux rayons peuvent prendre des valeurs différentes et même être égaux.

Pour modifier la valeur de l'angle formé par les rayons de la roue 1 passant par les points B1 et B2 afin de faire varier le temps d'arrêt de l'arbre 12, il suffit de déplacer le doigt 7 radialement dans une lumière 13 pratiquée dans le plateau 3 ( figure 6).

Bien entendu la présente invention ne se limite pas au mode de réalisation décrit et représenté mais s'étend, au contraire, à toutes variantes de formes et dimensions.

C'est ainsi,entre autres, que le disque 3 peut être limité à une manivelle comportant la lumière 13 précitée.

0083539

REVENDICATIONS.

1-Dispositif pour entraîner un arbre de façon intermittente à partir d'une commande continue, caractérisé en ce qu'il comporte une roue dentée (1) fixe, sur laquelle engrène une seconde roue dentée (2) qui est entraînée pour rouler de façon continue sur celle (1), ladite roue (2) étant solidaire d'un disque (3) de plus grand diamètre comportant un doigt (7) susceptible d'entraîner en rotation dans les deux sens un bras (10) rendu solidaire de la bague extérieure d'une roue libre (11) d'entraînement de l'arbre mené (12).

2-Dispositif selon la revendication 1, caractérisé en ce que la position du doigt est réglable radialement sur le disque.

# Fig.1

# Fig.2

0083539

Fig.3

Fig.4

Fig.5

Fig.6